Europäisches Patentamt

(19) European Patent Office

Office européen des brevets

(11) Publication number: **0 301 093 B1**

(12) **EUROPEAN PATENT SPECIFICATION**

(45) Date of publication of patent specification:
23.10.91 Bulletin 91/43

(21) Application number: **87902714.2**

(22) Date of filing: **09.04.87**

(86) International application number:
**PCT/JP87/00223**

(87) International publication number:
**WO 87/06199 22.10.87 Gazette 87/23**

(51) Int. Cl.⁵: **B60C 9/08,** B60C 13/00,
B60C 15/06

(54) **RADIAL TIRE FOR HIGH LOAD WITH IMPROVED VIBRATION DAMPING PERFORMANCE.**

(30) Priority: **09.04.86 JP 53968/86**

(43) Date of publication of application:
**01.02.89 Bulletin 89/05**

(45) Publication of the grant of the patent:
**23.10.91 Bulletin 91/43**

(84) Designated Contracting States:
**DE FR GB**

(56) References cited:
**EP-A- 0 017 258**
**FR-A- 2 095 204**
**JP-A- 5 237 303**
**JP-A- 5 920 707**
**JP-A-58 308 07**
**JP-B- 5 532 562**
**US-A- 4 289 184**
**US-A- 4 573 511**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **OHASHI, Susumu**
**4-1, Homigaoka Toyota-shi**
**Aichi 470-03 (JP)**
Inventor: **NISHIMURA, Takashi**
**3-1, Izumidai 6-chome**
**Kita-ku, Kobe-shi Hyogo 651-11 (JP)**

(74) Representative: **Stewart, Charles Geoffrey**
**SP TYRES UK LIMITED Tyre Technical Division**
**Fort Dunlop Birmingham B24 9QT (GB)**

## Description

The present invention relates to a radial tyre for high load suitable for material handling vehicles, and construction vehicles.

Hitherto, the so called crossply or bias ply tyre has been used for high load condition industrial vehicles, constructions vehicles and the like, but recently, radial tyres having a carcass of steel cords have become most popular because of excellent ride comfort and good wear resistance.

However, such radial tyres have a smaller vertical spring coefficient and less damping and so especially when used on fork-lifts which continually turn, start and stop much rolling and pitching of the vehicle occurs. Also when the tyres run over projections on the road the vehicle body rolls constantly. This becomes a real problem, if the steel tyres with conventional structure are used on the industrial vehicles, such as the fork-lift or very high working vehicles, because they become a factor allowing and causing vibration of the vehicle, its mast or crane. In comparison radial tyres applied to passenger cars do not suffer from this problem.

A known tyre presenting all the features of the preamble of claim 1 is shown, e.g., in US-A-4 573 511.

The inventors studied ways of reinforcing the carcass of such radial tyres, particularly the portions in the tyre sidewalls which bend and investigated means by which the vibration damping performance could be improved, and the object of the present invention is to meet these objectives.

Accordingly, the present invention provides a radial tyre comprising the features of claim 1.

The invention is illustrated by way of example in the drawings which are as follows: -

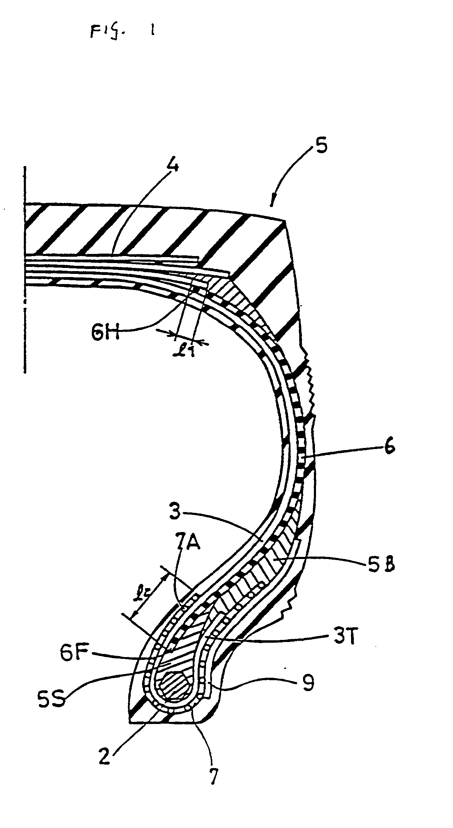

In Fig.1. radial tyres for high loads has a carcass ply 3 having both edges folded back around respective bead cores 2 and secured thereto. Also provided are a belt layer 4, bead apexes 5 and two carcass cord reinforcing layers 6 on the outside of the carcass one at either side of the tyre which extend to the beads from both edge portions of the belt layer 4.

Each bead is reinforced by a bead reinforcing layer 7, which is disposed on the outside (in this embodiment) of the carcass 3 so as to surround the bead core 2, and each carcass cord reinforcing layer 6 overlaps the belt layer 4 and the bead reinforcing layer 7 in both edge portions thereof in the radial direction of the tyre.

The carcass cord reinforcing layers 6 reinforce the sidewalls of the tyre, and, for that, high elastic cords such as aromatic polyamide fibre cords are preferably used, although organic fibre cords such as nylon, polyester and/or rayon are also usable. The fibre cords are laid at a bias angle between 30 and 90 degrees to the radial direction of the tyre, thereby increasing the lateral rigidity of the tyre sidewalls by interacting with the carcass 3 of which the cords are laid in the radial direction.

The upper edge 6H of the carcass cord reinforcing layer 6 is positioned under the edge portion of the belt layer 4 so as to partly overlap with the belt layer 4. The upper edges 6H are accordingly secured between the belt layer 4 and the carcass 3, as shown.

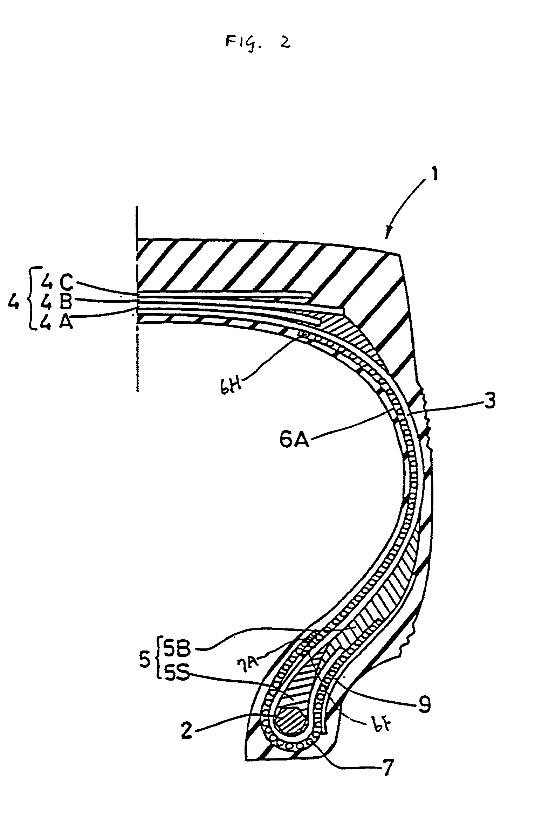

Fig.2, shows an embodiment in which the carcass cord reinforcing layers 6 are disposed on the inside of the carcass ply 3. The lower edge 6F of the carcass cord reinforcing layer 6 is interposed between the bead reinforcing layer 7 and the carcass 3. The upper edge 6H is then overlapped only indirectly with the belt layer 4.

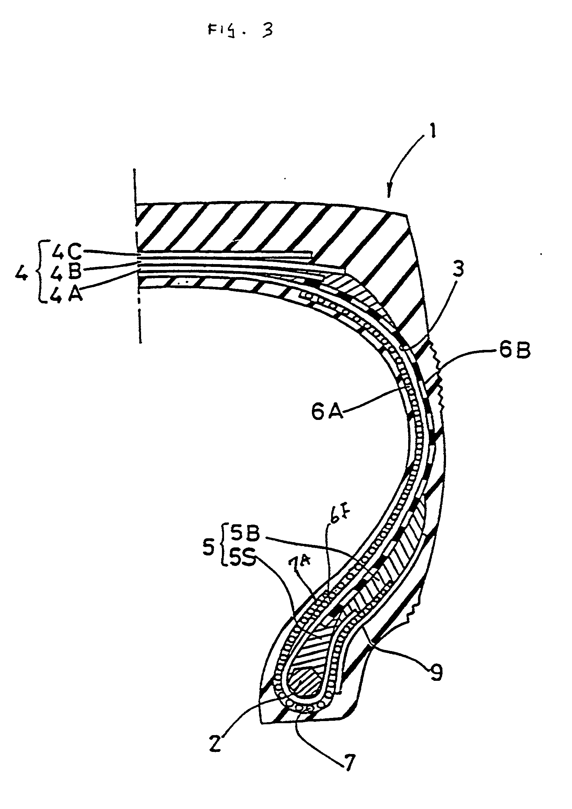

The embodiment of Fig.3 has two carcass cord reinforcing layers 6A and 6B in each sidewall which are disposed on both the inside and the outside of the carcass ply 3.

The result is that the transmission of force from the tread to the tyre sidewall is improved by the reinforcing layers 6, and the vibration damping performance of the tyre is also improved. The sidewalls are reinforced by the radial cord carcass 3 and the carcass reinforcing layers 6 in which the cords are arranged at a bias, and as a result, the vertical coefficient is increased and generation of rolling and/or pitching of a vehicle is reduced even when there is an unbalance of loads between the left and right wheels.

The lower edge 6F of the carcass cord reinforcing layer 6 is, as shown in the figures, terminated in a position above the bead core 2 and axially inside the bead core 2 -- not on the folded portion (3T) side of the carcass ply 3. It overlaps the folded part 7A of the bead reinforcing layer 7 indirectly through the carcass ply 3 (see Fig.1) and is not itself secured around the bead core 2. The bead reinforcing layer 7 extends into the sidewall beyond the folded portion 3T of the carcass 3, although optically the folded portion 3T can be terminated in a position higher than the upper edge of the bead reinforcing layer 7.

By overlapping the lower edge part 6F of the carcass cord reinforcing layer 6 of the bias arrangements with the bead reinforcing layer 7, the tyre load transmitted between the tyre beads and the wheel is dispersed more widely than in conventional structures not only in the radial direction but also in the circumferential direction of the tyre, and also the vibration damping performance is improved. Furthermore the generation of roll and pitch in a vehicle is lessened.

Preferably, the breadth 11 of the overlap of the carcass cord reinforcing layer 6 with the belt layer 4 and the breadth 12 of the overlap of the carcass cord reinforcing layer 6 with the bead reinforcing layer 7 are more than 5mm. In this embodiment, they are 20 mm and 30 mm, respectively. If they are less than 5 mm, the load can not be transmitted smoothly and the vibration damping performance is not improved.

Under ordinary conditions, the carcass cord reinforcing layer 6 preferably comprises only one ply of cords if the cords are aromatic polyamide fibre cords, but if the cords are nylon fibre cords or the like it is preferably formed by two or more plies arranged crosswise.

In the present invention, the bead apexes 5 are disposed radially outside and adjacent to the above-mentionned carcass cords. For the bead apexes 5, there is preferably used a two-component apex comprising a stiffener made of hard rubber having JIS A hardness of 75 to 90 degrees and a buffer made of soft rubber having JIS A hardness of 45 to 65 degrees. As a matter of course, there can be used a single-component apex made of hard rubber. The upper edge thereof extends to the range of 20 to 60 % of the cross-sectional height of the tyre, and provided the functions of reinforcing the beads and the sidewalls and increasing the lateral and vertical spring coefficient of the tyre.

In this embodiment, a further reinforcing layer 9, which extends toward the sidewall beyond the bead reinforcing layer 7, is disposed outside each bead reinforcing layer 7.

As mentioned above, in the present invention, the steel radial tyre is provided with carcass cord reinforcing layers having a bias arrangement which are disposed adjacent to the outside of the radial cords of the carcass extending from the beads to the two edges of the belt layer, whereby the lateral and vertical spring coefficients of the tyre are greater than the conventional steel tyre. Accordingly, unstable states due to rolling and the pitching are greatly prevented, and at the same time, damping performance of the vibration for the mast of fork-lifts, and vibration of the top of the high reach vehicles such as truck cranes and the like is effectively improved.

By way of example tyres of size 700.R12 were made for trial in accordance with the structure shown in Fig.1 and the specifications shown in Table 1, and tested for various tyre characteristics such as rolling, damping coefficient and spring coefficient. As reference for comparison, bias tyres, steel textile tyres, and steel radial tyres were made in accordance with the prior art and the specifications shown in Table 1. The measurements of the characteristics shown in Table 1 were performed under the conditions that the air pressure was 7.0 kgf/cm (for bias tyre) and 9.0 kgf/cm (for radial tyre) and the advantages of the invention can be clearly seen.

TABLE 1

| | Ref. 1 | Ref.2 | Ref. 3 | Ref. 4 | Ex. 1 |
|---|---|---|---|---|---|
| **Carcass** | | | | | |
| Structure | Bias | Radial | Radial | Radial | Radial |
| No. of ply | 6 | 4 | 1 | 1 | 1 |
| Cord material | Nylon | Nylon | Steel | Steel | Steel |
| | 1260d/2 | 1500d/2 | 7x4/0.175 | .7x4/0.175 | 7x4/0.175 |
| Cord angle (°) | 36 | 90 | 55 | 90 | 90 |
| **Belt layer** | | | | | |
| No. of ply | 1 | 3 | 3 | 3 | 3 |
| Cord material | Nylon | Steel | Steel | Steel | Steel |
| | 840d/2 | 3/0.20+6/0.38 | 3/0.20+6/0.38 | 3/0.20+6/0.38 | 3/0.20+6/0.38 |
| Cord angle (°) | 36 | 67/16/16 | 67/16/16 | 67/16/16 | 67/16/16 |
| **Cord reinforcing layer** | | | | | |
| No. of ply | | | | 2 | 2 |
| Cord material | | | | Nylon | Nylon |
| | | | | 1260d/2 | 1260d/2 |
| Cord angle (to the radial direction) | | | | 70° | 70° |
| Overlap (Belt layer) | | | | 0 | 20 mm |
| Overlap (Bead reinforcing layer) | | | | 0 | 30 mm |
| **Bead apex** | | | hard/soft | hard/soft | hard/soft |
| | | | two-compo. | two-compo. | two-compo. |
| JIS A hardness (°) | 86 | 86 | 86/60 | 86/60 | 86/60 |
| No. of rollings to convergence *1 | 8.7 | 9.2 | 10.5 | 10.3 | 9.5 |
| Convergence time (sec) *1 | 9.9 | 10.4 | 12.3 | 12.0 | 10.7 |
| Damping coefficient *1 | 100 | 96 | 74 | 81 | 100 |
| Feeling test *2 | 4+ | 3+ | 3- | 2- | 4+ |
| Vertical spring coefficient (kgf/mm) | 79 | 98 | 91 | 93 | 96 |
| Lateral spring coefficient (kgf/mm) | 28 | 29 | 28 | 29 | 31 |

*1: The number of rollings to convergence, the convergence time and the damping coefficient were measured with a accelerometer attached to the mast of a forklift when a wheel on one side run over a protrusion on a loaded condition. The damping coefficient is indicated by an index based on an assumption that the result of the reference 1 is 100, wherein the larger the value, the better the performance.

*2: In the feeling test, ride comfort upon actual running was evaluated by a feeling five point method. The larger the value, the better the performance. The point less than 3 means a unsatisfactory result.

EP 0 301 093 B1

## Claims

1. A radial tyre for high loads, comprising a pair of bead cores (2) disposed one in each bead of the tyre, a carcass (3) having cords laid in a radial direction at an angle of 80 to 90 degrees to the circumferential direction of the tyre, both edges (3T) of which are folded back around the bead cores to be secured thereto, a belt layer (4) having steel cords arranged outside the crown of the carcass (3) at a small angle to the circumferential direction of the tyre, a bead apex disposed between each of the carcass folded portions (3T) and the carcass main portion and extending taperingly from the upper side of each bead core into the sidewall of the tyre, an additional layer (6) disposed in each sidewall of the tyre, said additional layer (6) comprising at least one ply of cords arranged at a bias with respect to the radial direction, and being disposed on the carcass, and extending from the bead to the axially outer edge of the belt layer (4) so that the radially outer edge portion of the ply overlaps with the axially outer edge portion of the belt layer (4), characterised in that the cords of the carcass (3) are steel cords, and that the additional layer (6) is a damping layer comprising organic fibre cords.

2. A tyre according to claim 1 , characterised in that said organic fibre cord damping layer (6) in each sidewall is composed of one organic fibre cord ply disposed on the inside of the carcass.

3. A type according to claim 1, characterised in that said organic fibre cord damping layer (6) in each sidewall comprises one organic fibre cord ply disposed on the inside of the carcass and one organic fibre cord ply disposed on the outside of the carcass so that the radially outer edge portion thereof is secured between the carcass and the belt layer.

4. A tyre according to claim 2 or 3, characterised in that each bead is provided with a bead reinforcing layer (7) disposed along the carcass so as to surround the bead core, and the radially inner edge portion of the inside organic fibre cord ply overlaps with the bead reinforcing layer (7) so as to be secured between the carcass and the bead reinforcing layer.

5. A tyre according to claim 1, characterised in that said organic fibre cord damping layer (6) in each sidewall is composed of one organic fibre cord ply disposed on the outside of the carcass so that the radially outer edge portion of the ply is secured between the carcass and the belt layer (4).

6. A tyre according to claim 5, characterised in that each bead is provided with a bead reinforcing layer (7) disposed along the carcass so as to surround the bead core, and the radially inner edge portion of said at least one organic fibre cord ply overlaps with the bead reinforcing layer (7).

7. A tyre according to any one of the preceding claims 1 to 6 characterised in that the radially inner edge of said at least one organic fibre cord ply is terminated at a position above the bead core.

## Patentansprüche

1. Radialreifen für hohe Belastung, welcher umfaßt ein Paar je in jedem Wulst des Reifens untergebrachte Wulstkerne (2), eine Karkasse (3) mit einer in Radialrichtung mit einem Winkel von 80 bis 90° zur Umfangsrichtung des Reifens gelegten Korden, deren beide Kanten (3T) um die Wulstkerne zur sicheren Befestigung daran zurückgefaltet sind, eine Gürtellage (4) mit außerhalb der Krone der Karkasse (3) in einem kleinen Winkel zur Umfangsrichtung des Reifens angeordneten Stahlkorden, einen zwischen den jeweiligen zurückgefalteten Abschnitten (3T) der Karkasse und dem Karkass-Hauptabschnitt angeordneten Wulstreiter, der sich verjüngend von der oberen Seite jedes Wulstkerns in die Seitenwand des Reifens hinein erstreckt, eine in jeder Seitenwand des Reifens untergebrachte zusätzliche Schicht (6), welche zusätzliche Schicht (6) mindestens eine Kordlage umfaßt, die schräg bezüglich der Radialrichtung angeordnet sind, und an der Karkasse untergebracht ist und sich vom Wulst zur axial äußeren Kante der Gürtellage (4) so erstreckt, daß der radial äußere Kantenabschnitt der Lage den axial äußeren Kantenabschnitt der Gürtellage (4) überdeckt, dadurch gekennzeichnet, daß die Korde der Karkasse (3) Stahlkorde sind und daß die zusätzliche Schicht (6) eine Korde aus organischen Fasern umfassende Dämpfungsschicht ist.

2. Reifen nach Anspruch 1, dadurch gekennzeichnet, daß die Dämpfungsschicht (6) aus organischen Faserkorden in jeder Seitenwand aus einer Kordlage organischer Fasern zusammengesetzt ist, die an der Innenseite der Karkasse untergebracht ist.

3. Reifen nach Anspruch 1, dadurch gekennzeichnet, daß die Dämpfungsschicht (6) aus organischen Faserkorden in jeder Seitenwand eine Kordlage aus organischen Fasern umfaßt, die an der Innenseite der Karkasse untergebracht sind, und eine Kordlage aus organischen Fasern, die an der Außenseite der Karkasse untergebracht sind, so daß deren radial äußerer Kantenabschnitt zwischen der Karkasse und der Gürtelschicht befestigt ist.

EP 0 301 093 B1

4. Reifen nach Anspruch 2 oder 3, dadurch gekennzeichnet, daß jeder Wulst mit einer Wulstverstärkungsschicht (7) versehen ist, welche längs der Karkasse so angeordnet ist, daß sie den Wulstkern umgibt, und der radial innere Kantenabschnitt der inneren Kordlage aus organischen Fasern die Wulstverstärkungsschicht (7) so überdeckt, daß sie zwischen der Karkasse und der Wulstverstärkungsschicht befestigt ist.

5. Reifen nach Anspruch 1, dadurch gekennzeichnet, daß die Dämpfungsschicht (6) aus organischen Faserkorden in jeder Seitenwand aus einer Kordlage organischer Fasern zusammengesetzt ist, die an der Außenseite der Karkasse untergebracht ist, so daß der radial äußere Kantenabschnitt der Lage zwischen der Karkasse und der Gürtelschicht (4) befestigt ist.

6. Reifen nach Anspruch 5, dadurch gekennzeichnet, daß jeder Wulst mit einer Wulstverstärkungsschicht (7) versehen ist, welche längs der Karkasse so angeordnet ist, daß sie den Wulstkern umgibt und daß der radial innere Kantenabschnitt der mindestens einen organischen Faserkordlage sich mit der Wulstverstärkungsschicht (7) überdeckt.

7. Reifen nach einem der vorangehenden Ansprüche 1 bis 6, dadurch gekennzeichnet, daß die radial innere Kante der mindestens einen organischen Faserkordlage an einer Stelle über dem Wulstkern endet.

**Revendications**

1. Pneumatique à carcasse radiale destiné à supporter des charges élevées, comprenant une paire de tringles (2) placées dans chaque talon du pneumatique, une carcasse (3) ayant des câblés disposés en direction radiale, faisant un angle de 80 à 90° avec la direction circonférentielle du pneumatique, les deux bords (3T) étant repliés autour des tringles afin qu'ils soient fixés à celles-ci, une couche (4) de ceinture ayant des câblés d'acier disposés à l'extérieur de la partie bombée de la carcasse (3) et faisant un petit angle avec la direction circonférentielle du pneumatique, un organe de bourrage de pointe de talon placé entre chacune des parties repliées (3T) de carcasse et la partie principale de carcasse et disposé avec une dimension qui diminue progressivement de la face supérieure de chaque tringle dans le flanc du pneumatique, une couche supplémentaire (6) placée dans chaque flanc du pneumatique, la couche supplémentaire (6) comportant au moins une nappe de câblés inclinés par rapport à la direction radiale, disposée sur la carcasse, cette nappe allant du talon vers le bord axialement externe de la couche de ceinture (4) de manière que la partie de bord radialement externe de la nappe recouvre la partie de bord axialement externe de la couche de ceinture (4), caractérisé en ce que les câblés de la carcasse (3) sont des câblés d'acier, et en ce que la couche supplémentaire (6) est une couche d'amortissement comprenant des câblés de fibres organiques.

2. Pneumatique selon la revendication 1, caractérisé en ce que la couche (6) d'amortissement de câblés de fibres organiques placée dans chaque flanc est composée d'une nappe de câblés de fibres organiques placée à l'intérieur de la carcasse.

3. Pneumatique selon la revendication 1, caractérisé en ce que la couche (6) d'amortissement de câblés de fibres organiques de chaque flanc comporte une couche de câblés de fibres organiques placée à l'intérieur de la carcasse et une couche de câblés de fibres organiques placée à l'extérieur de la carcasse de manière que sa partie de bord radialement externe soit fixée entre la carcasse et la couche de ceinture.

4. Pneumatique selon la revendication 2 ou 3, caractérisé en ce que chaque talon a une couche (7) de renforcement de talon placée le long de la carcasse afin qu'elle entoure la tringle, et la partie de bord radialement interne de la nappe interne de câblés de fibres organiques recouvre la couche de renforcement de talon (7) afin qu'elle soit fixée entre la carcasse et la couche de renforcement de talon.

5. Pneumatique selon la revendication 1, caractérisé en ce que la couche (6) d'amortissement de câblés de fibres organiques placée dans chaque flanc est composée d'une nappe de câblés de fibres organiques placée à l'extérieur de la carcasse afin que la partie de bord radialement externe de la nappe soit fixée entre la carcasse et la couche de ceinture (4).

6. Pneumatique selon la revendication 5, caractérisé en ce que chaque talon a une couche (7) de renforcement de talon placée le long de la carcasse afin qu'elle entoure la tringle, et la partie de bord radialement interne de la couche au moins de câblés de fibres organiques recouvre la couche de renforcement de talon (7).

7. Pneumatique selon l'une quelconque des revendications précédentes 1 à 6, caractérisé en ce que le bord radialement interne de la couche au moins de câblés de fibres organiques se termine à un emplacement qui se trouve au-dessus de la tringle.

6

FIG. 1

FIG. 2

Fiq. 3